# EUROPÄISCHE PATENTSCHRIFT

(11) **EP 2 850 329 B1**
(45) Veröffentlichungstag und Bekanntmachung des Hinweises auf die Patenterteilung: **07.06.2017**
(21) Anmeldenummer: 13721941.6
(22) Anmeldetag: 30.04.2013
(51) Int. Cl.: F16C 33/20

(54) **GLEITLAGERVERBUNDWERKSTOFF**
PLAIN BEARING COMPOSITE MATERIAL
MATERIAU COMPOSITE POUR PALIER LISSE

(30) Priorität: 18.05.2012 DE 102012208345
(43) Veröffentlichungstag der Anmeldung: 25.03.2015
(73) Patentinhaber: KS Gleitlager GmbH, 68789 St. Leon-Rot (DE)
(72) Erfinder: PASTERNAK, Axel, 76669 Bad Schönborn (DE); REINICKE, Rolf, 76669 Bad Schönborn (DE); BICKLE, Ruediger, 68799 Reilingen (DE); SCHMID, Andreas, 71116 Gärtringen (DE); RICHTER, Frank, 72800 Eningen unter Achalm (DE); STECK, Corina, 72127 Kusterdingen (DE)
(74) Vertreter: DREISS Patentanwälte PartG mbB
(86) Internationale Anmeldenummer: PCT/EP2013/058966
(87) Internationale Veröffentlichungsnummer: WO 2013/171064

(56) Entgegenhaltungen:
- WO-A1-2008/128579
- JP-A- 2004 346 282

## Beschreibung

Die Erfindung betrifft einen Gleitlagerverbundwerkstoff mit einer Stützschicht, optional mit einer porösen Trägerschicht, insbesondere aus Bronze, und mit einem Gleitschichtmaterial aus einem matrixbildenden thermoplastischen Kunststoffmaterial und darin aufgenommenen Füllstoffen.

Gleitlagerverbundwerkstoffe und hieraus hergestellte Gleitlager mit einer Stützschicht und einer Kunststoffgleitschicht sind insbesondere bei Kraftfahrzeuganwendungen vorbekannt und üblich. Sie werden eingesetzt, um Wellen oder Wellenzapfen in einer zylindrischen oder buchsenförmigen, insbesondere bundbuchsenförmigen Lagerstelle zu lagern. Sie finden aber auch Anwendung bei sphärisch ausgebildeten Lageranordnungen. Typischerweise werden Gleitlagerverbundwerkstoffe endlos hergestellt, so dass ein aufrollbares Flachmaterialband gebildet wird. Zur Herstellung der Gleitlagerelemente werden von einem endlos zugeführten Flachmaterialband des Gleitlagerverbundwerkstoffs Platinenabschnitte abgelängt und dann auf Buchsen- oder Schalenform verformt, wobei typischerweise buchsenförmige Gleitlagerelemente mit einer Stoßfuge gebildet werden, die beim Einpressen der Gleitlagerelemente in eine Lageraufnahme im wesentlichen wenigstens nahezu geschlossen wird.

Bei den in der thermoplastischen Matrix des Gleitschichtmaterials aufgenommenen Füllstoffen handelt es sich um tribologisch wirksame Stoffe, die sowohl tragende und verschleißmindernde Eigenschaften als auch schmierende Eigenschaften haben.

Das Gleitschichtmaterial kann flächenhaft auf die Stützschicht, die insbesondere aus Stahl oder Aluminium gebildet sein kann, aufgebracht werden; beispielsweise könnte sie auflaminiert, aufgegossen oder aufgespritzt werden. Es kann aber auch eine dreidimensional poröse Trägerschicht zum Einsatz kommen, die beispielsweise auf die Stützschicht porös aufgesintert ist, wobei solchenfalls das Gleitschichtmaterial samt Füllstoffen von der dem späteren Gleitpartner zugewandten Seite her in die offenporige poröse Trägerschicht einimprägniert wird und so besser gehalten werden kann. Sie bildet dabei typischerweise einen Überstand über das Material der Trägerschicht von vorzugsweise 50 - 500 µm.

WO 2008/128579 A1 beschreibt einen Gleitlagerverbundwerkstoff der eingangs genannten Art und lehrt, die Gleitschicht mittels einer Zwischenschicht auf der metallischen Stützschicht zu halten, wobei die Zwischenschicht aus einem funktionalisierten thermoplastischen Polymer, insbesondere Fluorpolymer, mit spezifischen funktionellen Gruppen gebildet ist. Die Gleitschicht enthält PTFE, Polyamid, Polyetheretherketon oder ein Gemisch hieraus und kann Füllstoffe aus einer langen Liste umfassen, in der auch Wollastonit genannt ist.

JP 2004 346282 A offenbart ein Gleitlagerverbundwerkstoffmaterial und erwähnt eine Vielzahl von matrixbildenden Polymermaterialien, wobei PPA nicht genannt ist. Des Weiteren ist eine Vielzahl von nadel- oder faserförmigen Füllstoffen erwähnt, darunter auch Wollastonit, die in möglichst dichter Verteilung in dem Polymermaterial aufgenommen sein sollen.

Der vorliegenden Erfindung liegt die Aufgabe zugrunde, einen Gleitlagerverbundwerkstoff der eingangs genannten Art im Hinblick auf das Tragvermögen des Gleitschichtmaterials weiter zu verbessern.

Diese Aufgabe wird durch einen Gleitlagerverbundwerkstoff mit den Merkmalen des Anspruchs 1 gelöst.

Mit der vorliegenden Erfindung wurde zum einen erkannt, dass sich ein mineralischer Füllstoff in der Form von Wollastonit, also Calciumsilikat, CaSiO₃, oder genauer Ca₃[Si₃O₉], in der beanspruchten Menge in tribologischer Hinsicht als besonders vorteilhaft erweist. Es wurde weiter festgestellt, dass bei Verwendung von Wollastonit in nadelförmiger Modifikation die Tragfähigkeit des erfindungsgemäßen Gleitlagerverbundwerkstoffs weiter verbessert werden kann.

Wollastonit in seiner nadelförmigen Konfiguration lässt sich dabei dahingehend definieren, dass eine Abmessung c eines Wollastonit-Partikels wenigstens das vierfache, insbesondere wenigstens das fünffache zweier weiterer Abmessungen a und b beträgt. Unter einer plättchenförmigen Konfiguration ist eine Dimension a kleiner als das 0,3-fache der übrigen Dimensionen b und c, wobei die Abmessung b/c zwischen 0,7 - 1,3 liegt. Granularer oder blockförmiger Wollastonit hingegen umfasst Partikel, deren drei Abmessungen a, b und c jeweils zueinander, also a/b und a/c bzw. b/c zwischen 0,7 - 1,3 liegen. Die vorgenannten Dimensionen a, b, c sind dabei entlang von senkrecht aufeinander stehender Achsen gemessen.

Beispielsweise ist Wollastonit in seiner nadelförmigen Modifikation als TREMIN® 939-600 AST und in seiner block- oder granulatförmigen Modifikation als TREMIN® 283-800 AST von Quarzwerke GmbH, Frechen, Deutschland, erhältlich. Dieser nadelförmige Wollastonit lässt sich wie folgt charakterisieren: Mittlere Nadellänge L₅₀ = 21 µm (L₉₀ = 49 µm; L₁₀ = 9 µm). Dieser nadelförmige Wollastonit ist mit Aminosilan oberflächenbehandelt. Der granulatförmige Wollastonit weist einen D₉₅-Wert von 8 µm und einen D₅₀-Wert von 25 µm auf.

Weiter wird vorgeschlagen, dass der Wollastonit zu wenigstens 60 Vol.-%, insbesondere zu wenigstens 70 Vol.-% und weiter insbesondere zu wenigstens 80 Vol.-% seines Anteils in nadelförmiger Modifikation enthalten ist. Es kann sich auch als vorteilhaft erweisen, wenn ein größerer Anteil des Wollastonit in nadelförmiger Modifikation und ein kleinerer Anteil des Wollastonit in granularer oder blockförmiger Modifikation vorliegt. Der Anteil des nadelförmigen Wollastonit beträgt dabei vorteilhafterweise das 3- bis 5-Fache des Anteils des granularen Wollastonit.

Bei einer bevorzugten Ausführungsform des erfindungsgemäßen Gleitlagerverbundwerkstoffs beträgt der Anteil von Wollastonit an dem Gleitschichtmaterial 1 - 30 Vol.-% und insbesondere 2 -25 Vol.-%.

Nach einem weiteren an sich selbständigen Erfindungsgedanken wird vorgeschlagen, dass das Gleitschichtmaterial des weiteren einen Anteil von 0,2 - 20 Vol.-%, 0,5 - 20 Vol.-%, insbesondere 0,5 - 15 Vol.-%, insbesondere 0,5 - 10 Vol.-%, insbesondere 0,5 - 5 Vol.-% eines weiteren Füllstoffs aus der Klasse der Metallsulfide umfasst. Es wurde erfindungsgemäß festgestellt, dass Wollastonit im Zusammenwirken mit Metallsulfid als einem weiteren Füllstoff eine unerwartete Performancesteigerung erfährt. Es werden einerseits die tragenden und verschleißmindernden Eigenschaften des Gleitlagerverbundwerkstoffs erhöht und zum anderen der Reibwert reduziert. Als vorteilhafte Füllstoffe aus der Klasse der Metallsulfide wird Molybdändisulfid (MoS₂), Wolframdisulfid (WS₂), Kupfersulfid (CuS) und/oder Zinksulfid (ZnS) vorgeschlagen.

Weiter kann es sich als vorteilhaft erweisen, wenn außerdem tribologisch wirksame Füllstoffe ausgewählt aus PTFE, Graphit, keramischen Stoffen, wie insbesondere hexagonalem Bornitrid oder Titandioxid, Kohlenstofffasern, Aramidfasern, Aramidpulver, Bariumsulfat in dem Gleitschichtmaterial enthalten sind.

Vorzugsweise wird der Anteil aller Füllstoffe einschließlich des Wollastonit-Anteils auf höchstens 50 Vol.-% beschränkt.

Ein erfindungsgemäßer Gleitlagerverbundwerkstoff hat sich im Hinblick auf eine große Anzahl von Anwendungen als vorteilhaft erwiesen. Eine thermoplastische Matrix aus überwiegend PPA zeigt zwar nicht die Hochtemperaturbeständigkeit eines Werkstoffs mit einer Matrix aus PEEK, liegt aber dennoch deutlich oberhalb der Beanspruchbarkeit von PVDFbasierten Kunststoffgleitschichten.

Bei einer weiteren besonders bevorzugten Ausführungsform umfasst das Gleitschichtmaterial PPA und als Metallsulfid Wolframdisulfid oder Molybdändisulfid. Die bevorzugte Zusammensetzung des Gleitschichtmaterials beträgt insbesondere 70 - 80 Vol.-% PPA, 15 - 25 Vol.-% Wollastonit und 2 - 10 Vol.-% WS₂ oder MoS₂.

Gegenstand der Erfindung ist des weiteren ein Gleitlager zur Aufnahme eines wellen- oder zapfenförmigen Gleitpartners, welches aus einem erfindungsgemäßen Gleitlagerverbundwerkstoff hergestellt, insbesondere in einem Biege-Rollprozess hergestellt wurde.

Weitere Merkmale, Einzelheiten und Vorteile der Erfindung ergeben sich aus den beigefügten Patentansprüchen und aus der zeichnerischen Darstellung und nachfolgenden Beschreibung einer bevorzugten Ausführungsform des erfindungsgemäßen Gleitlagerverbundwerkstoffs. In der Zeichnung zeigt:
Figur 1 eine schematische Schnittansicht eines erfindungsgemäßen Gleitlagerverbundwerkstoffs;
Figur 2 das Ergebnis von Verschleißprüfungen an verschiedenen Gleitlagerverbundwerkstoffen;
Figur 3 a,b,c eine schematische Darstellung (nicht maßstabsgetreu) zur Einteilung des Wollastonit in verschiedene Modifikationen.

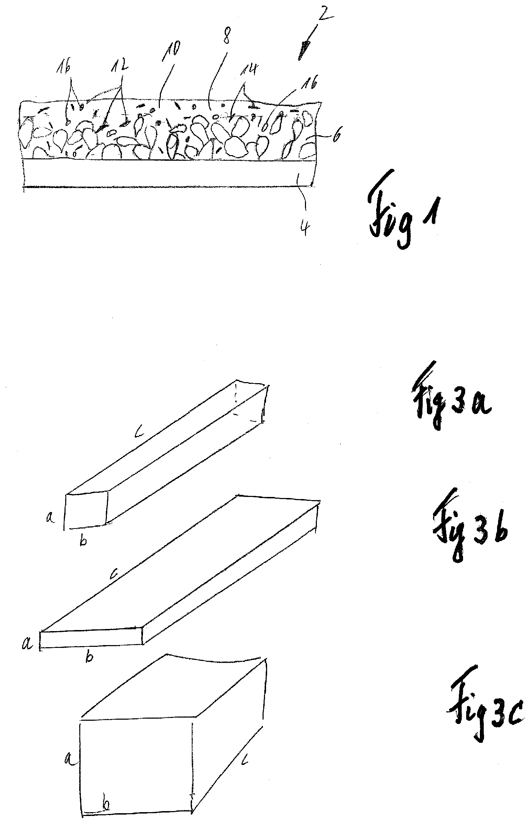

Der in Figur 1 dargestellte Gleitlagerverbundwerkstoff 2 umfasst eine metallische Stützschicht 4, insbesondere aus Stahl, und eine (optionale) poröse Trägerschicht 6, insbesondere aus Bronze, bei der es sich insbesondere um eine aufgesinterte Schicht handelt, sowie ein Gleitschichtmaterial 8 aus einem matrixbildenden Kunststoffmaterial 10 und darin aufgenommenen Füllstoffen 12. Die Füllstoffe 12 umfassen erfindungsgemäß Wollastonit 14 in einem Anteil von 1 bis 40 Vol.-% bezogen auf das Gleitschichtmaterial 8, welcher zumindest zur Hälfte seines Anteils in nadelförmiger Modifikation vorliegt. Vorzugsweise sind weitere Füllstoffe vorgesehen, die vorzugsweise Metallsulfide 16 umfassen können.

Figur 4 a, b, c zeigt eine rein schematische nicht maßstabsgetreue Darstellung zur Einteilung des Wollastonit in verschiedene Modifikationen anhand von Verhältnisbereichen von aufeinander senkrecht stehenden Abmessungen a, b, c, wie dies an früherer Stelle angegeben wurde.

Bei einer bevorzugten Ausführungsform des erfindungsgemäßen Gleitlagerverbundwerkstoffs ist das thermoplastische Kunststoffmaterial oder Polymer von PPA gebildet. Für die nachfolgenden Prüfungen wurde PPA der Handelsmarke VESTAMID® Htplus M1000 natur, erhältlich von EVONIK Degussa GmbH, Essen, Deutschland, als matrixbildendes thermoplastisches Polymer verwendet. Als mineralischer Füllstoff wurde Wollastonit in nadelförmiger sowie in granularer Modifikation der eingangs beschriebenen Art und Marke verwendet. Als bevorzugte Füllstoffe aus der Klasse der Metallsulfide wurde Molybdändisulfid und Wolframdisulfid verwendet.

Die folgenden Gleitlagerverbundwerkstoffe wurden hergestellt, und hieraus wurden gerollte Buchsen für Vergleichsprüfungen gefertigt. Die Gleitlagerverbundwerkstoffe umfassen gleichermaßen den im Zusammenhang mit Figur 1 beschriebenen Aufbau, wobei der Überstand des Gleitschichtmaterials 10 über der porösen Trägerschicht 6 etwa 150 µm beträgt. Als Füllstoffe aus der Klasse der Metallsulfide wurde WS₂ verwendet. Die Zusammensetzung des Gleitschichtmaterials war wie folgt:

### Beispiel 1:

90 Vol.-% PPA
10 Vol.-% Wollastonit in nadelförmiger Modifikation

### Beispiel 2:

89 Vol.-% PPA
10 Vol.-% Wollastonit in nadelförmiger Modifikation
1 Vol.-% WS₂

### Beispiel 3:

89 Vol.-% PPA
5 Vol.-% Wollastonit in nadelförmiger Modifikation
5 Vol.-% Wollastonit in granularer Modifikation
1 Vol.-% WS₂

### Beispiel 4:

93 Vol.-% PPA
7 Vol.-% Wollastonit in granularer Modifikation

Es wurden die folgenden Vergleichsmessungen ausgeführt:

Verschleißprüfung auf einem Lagerprüfstand: Die gerollten Buchsen aus Gleitlagerverbundwerkstoff mit einer Breite von 20 mm und einem Innendurchmesser von 30 mm sind in einen Buchsenaufnahmekörper eingepresst. Sie laufen gegenüber einer Welle aus Stahl. Über den Buchsenaufnahmekörper kann eine Last senkrecht zur Welle vorgegeben bzw. variiert werden. Die Prüfparameter sind:
Gleitgeschwindigkeit: 0,16 m/sec
Temperatur: 30° C
Medienschmierung: V-Öl
Öldruck: 2 bar (wird über Buchsenaufnahmekörper zugeführt)
Laststeigerung in 0,6 kN-Schritten bis maximale Last von 30 kN
Haltezeit: 900 sec/Stufe.

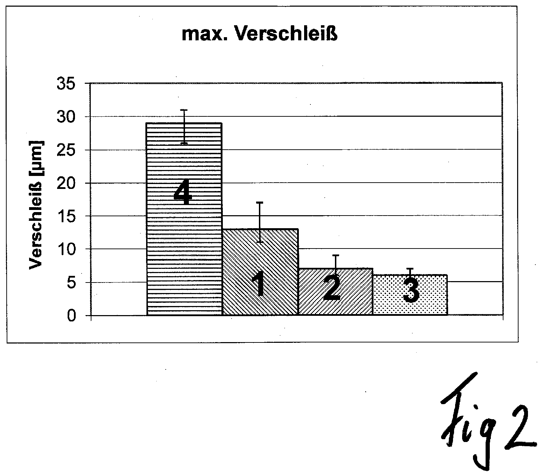

Nach dem Durchlaufen des Tests mit allen Stufen wird die Buchse vermessen und es wird der Verschleiß in µm ermittelt Der Verschleiß wird hierfür im oberen kraftbeaufschlagten Scheitel der Buchse beidseits in einem Abstand von 3 mm vom Buchsenrand bestimmt und hiervon der Mittelwert zugrunde gelegt. Aus Messwerten für drei Buchsen wird dann wiederum der Mittelwert ermittelt. Es ergeben sich für den Verschleiß dabei die Versuchsergebnisse gemäß Figur 2. Man erkennt deutlich die Performancesteigerung, die durch die Verwendung von nadelförmigem Wollastonit gegenüber der Verwendung von granularem Wollastonit erreicht werden kann. Auch der vorteilhafte Effekt von WS₂ als Metallsulfid ist ersichtlich.

## Patentansprüche

1. Gleitlagerverbundwerkstoff (2) mit einer Stützschicht (4), optional mit einer porösen Trägerschicht (6), insbesondere aus Bronze, und mit einem Gleitschichtmaterial (8) aus einem matrixbildenden thermoplastischen Kunststoffmaterial (10) aus Polyphthalamid (PPA) und darin aufgenommenen Füllstoffen (12), wobei das Gleitschichtmaterial einen Anteil von 1-40 Vol.-% Wollastonit (14) als mineralischen Füllstoff umfasst und wenigstens die Hälfte des Wollastonit (14) in nadelförmiger Modifikation vorliegt.

2. Gleitlagerverbundwerkstoff nach Anspruch 1, **dadurch gekennzeichnet, dass** wenigstens 60 Vol.-%, insbesondere wenigstens 70 Vol.-% und weiter insbesondere wenigstens 80 Vol.-% des Wollastonit in nadelförmiger Modifikation vorliegt.

3. Gleitlagerverbundwerkstoff nach Anspruch 1 oder 2, **dadurch gekennzeichnet, dass** der Anteil von Wollastonit an dem Gleitschichtmaterial (8) 1 - 30 Vol.-% und insbesondere 2 - 25 Vol.-% beträgt.

4. Gleitlagerverbundwerkstoff nach einem oder mehreren der vorstehenden Ansprüche, **dadurch gekennzeichnet, dass** das Gleitschichtmaterial (8) des weiteren einen Anteil von 0,2 - 20 Vol.%, 0,5 - 20 Vol.-%, insbesondere 0,5 - 15 Vol.-%, insbesondere 0,5 - 10 Vol.-%, insbesondere 0,5 - 5 Vol.-% eines weiteren Füllstoffs (16) aus der Klasse der Metallsulfide umfasst.

5. Gleitlagerverbundwerkstoff nach Anspruch 4, **dadurch gekennzeichnet, dass** der weitere Füllstoff (16) aus der Klasse der Metallsulfide Molybdändisulfid (MoS₂), Wolframdisulfid (WS₂), Kupfersulfid (CuS) und/oder Zinksulfid (ZnS) umfasst.

6. Gleitlagerverbundwerkstoff nach einem oder mehreren der vorstehenden Ansprüche, **dadurch gekennzeichnet, dass** außerdem tribologisch wirksame Füllstoffe ausgewählt aus PTFE, Graphit, keramischen Stoffen, wie insbesondere hexagonalem Bornitrid oder Titandioxid, Kohlenstofffasern, Aramidfasern, Aramidpulver, Bariumsulfat in dem Gleitschichtmaterial (8) enthalten sind.

7. Gleitlagerverbundwerkstoff nach einem oder mehreren der vorstehenden Ansprüche, **dadurch gekennzeichnet, dass** der Anteil aller Füllstoffe (12) einschließlich des Wollastonit-Anteils höchstens 50 Vol.-% beträgt.

8. Gleitlagerverbundwerkstoff nach einem oder mehreren der vorstehenden Ansprüche, **dadurch gekennzeichnet, dass** das Gleitschichtmaterial (8) PPA und WS₂ oder MoS₂ umfasst, insbesondere 70 - 94 Vol.-% PPA, 5 - 25 Vol.-% Wollastonit und 0,5 - 10 Vol.-% WS₂ oder MoS₂ umfasst.

9. Gleitlager, hergestellt aus einem Gleitlagerverbundwerkstoff (2) nach einem oder mehreren der vorstehenden Ansprüche.

## Claims

1. Plain bearing composite material (2) comprising a supporting layer (4), optionally a porous carrier layer (6), in particular of bronze, and a sliding layer material (8) of a matrix-forming thermoplastic plastic material (10) of polyphthalamide (PPA) and fillers (12) accommodated therein, wherein the sliding layer material comprises a portion of 1 to 40 vol.% of wollastonite (14) as a mineral filler and at least half of the wollastonite (14) is present in needle-shaped modification.

2. Plain bearing composite material according to claim 1, **characterized in that** at least 60 vol.%, in particular at least 70 vol.%, and moreover, in particular at least 80 vol.% of the wollastonite is present in needle-shaped modification.

3. Plain bearing composite material according to claim 1 or 2, **characterized in that** the portion of wollastonite in the sliding layer material (8) is 1 to 30 vol.% and, in particular 2 to 25 vol.%.

4. Plain bearing composite material according to one or more of the preceding claims, **characterized in that** the sliding layer material (8) moreover comprises a portion of 0.2 to 20 vol.%, 0.5 to 20 vol.%, in particular 0.5 to 15 vol.%, in particular 0.5 to 10 vol.%, in particular 0.5 to 5 vol.% of a further filler (16) from the class of metal sulfides.

5. Plain bearing composite material according to claim 4, **characterized in that** the further filler (16) from the class of metal sulfides comprises molybdenum disulfide (MoS₂), tungsten disulfide (WS₂), copper sulfide (CuS) and/or zinc sulfide (ZnS).

6. Plain bearing composite material according to one or more of the preceding claims, **characterized in that** tribologically effective fillers are also contained in the sliding layer material (8) and are selected from PTFE, graphite, ceramic substances, such as in particular hexagonal boron nitride or titanium dioxide, carbon fibers, aramide fibers, aramide powder, barium sulfate.

7. Plain bearing composite material according to one or more of the preceding claims, **characterized in that** the portion of all fillers (12) together including the wollastonite percentage is maximally 50 vol.%.

8. Plain bearing composite material according to one or more of the preceding claims, **characterized in that** the sliding layer material (8) comprises PPA and WS₂ or MoS₂, in particular, 70 to 94 vol.% of PPA, 5 to 25 vol.% of wollastonite and 0.5 to 10 vol.% of WS₂ or MoS₂.

9. Plain bearing produced from a plain bearing composite material (2) in accordance with one or more of the preceding claims.

## Revendications

1. Matériau composite de palier à glissement (2) comprenant une couche d'appui (4), éventuellement une couche de support poreuse (6), en particulier en bronze, et comprenant un matériau de couche de glissement (8) composé d'une matière plastique thermoplastique (10) en polyphtalamide (PPA) et de matières de charge (12) qui y sont logées, dans lequel le matériau de couche de glissement comprend comme matière de charge minérale une proportion de 1 à 40 % en volume de wollastonite (14), et au moins la moitié de la wollastonite (14) se présentant sous forme d'une modification aciculaire.

2. Matériau composite de palier à glissement selon la revendication 1, **caractérisé en ce qu'**au moins 60 % en volume, en particulier au moins 70 % en volume, et plus particulièrement au moins 80 % en volume de la wollastonite se présentent sous la forme d'une modification aciculaire.

3. Matériau composite de palier à glissement selon la revendication 1 ou 2, **caractérisé en ce que** la proportion de wollastonite dans le matériau de couche de glissement (8) est de 1 à 30 % en volume, et en particulier de 2 à 25 % en volume.

4. Matériau composite de palier à glissement selon une ou plusieurs des revendications précédentes, **caractérisé en ce que** le matériau de couche de glissement (8) comprend en outre une proportion de 0,2 à 20 % en volume, de 0,5 à 20 % en volume, en particulier de 0,5 à 15 % en volume, en particulier de 0,5 à 10 % en volume, en particulier de 0,5 à 5 % en volume d'une matière de charge supplémentaire (16) de la classe des sulfures métalliques.

5. Matériau composite de palier à glissement selon la revendication 4, **caractérisé en ce que** la matière de charge supplémentaire (16) de la classe des sulfures de métaux comprend du disulfure de molybdène (MoS₂), du disulfure de tungstène (WS₂), du sulfure de cuivre (CuS) et/ou du sulfure de zinc (ZnS).

6. Matériau composite de palier à glissement selon une ou plusieurs des revendications précédentes, **caractérisé en ce que** des matières de charges également tribologiquement actives choisies parmi du PTFE, du graphite, des matières céramiques, comme notamment le nitrure de bore hexagonal ou le dioxyde de titane, des fibres de carbone, des fibres d'aramide, de la poudre d'aramide, du sulfate de baryum sont contenues dans le matériau de couche de glissement (8).

7. Matériau composite de palier à glissement selon une ou plusieurs des revendications précédentes, **caractérisé en ce que** la proportion de toutes les matières de charge (12), y compris la proportion de wollastonite, est au plus de 50 % en volume.

8. Matériau composite de palier à glissement selon une ou plusieurs des revendications précédentes, **caractérisé en ce que** le matériau de couche de glissement (8) comprend du PPA et du WS₂ ou du MoS₂, en particulier 70 à 94 % en volume de PPA, 5 à 25 % en volume de wollastonite et 0,5 à 10 % en volume de WS₂ ou MoS₂.

9. Palier lisse, réalisé à partir d'un matériau composite de palier à glissement (2) selon une ou plusieurs des revendications précédentes.
